# EUROPÄISCHE PATENTSCHRIFT

(11) **EP 3 126 991 B1**
(45) Veröffentlichungstag und Bekanntmachung des Hinweises auf die Patenterteilung: **01.08.2018**
(21) Anmeldenummer: 15713892.6
(22) Anmeldetag: 02.04.2015
(51) Int. Cl.: G06F 13/38, G06F 13/42

(54) **ELEKTRISCHES INTERFACEMODUL**
ELECTRICAL INTERFACE MODULE
MODULE D'INTERFACE ÉLECTRIQUE

(30) Priorität: 03.04.2014 DE 102014206387
(43) Veröffentlichungstag der Anmeldung: 08.02.2017
(73) Patentinhaber: Phoenix Contact GmbH & Co. KG, 32825 Blomberg (DE)
(72) Erfinder: SCHOLZ, Peter, 33034 Brakel (DE); WIMMER, Lars-Peter, 31787 Hameln (DE)
(74) Vertreter: Schmelcher, Thilo
(86) Internationale Anmeldenummer: PCT/EP2015/057321
(87) Internationale Veröffentlichungsnummer: WO 2015/150521

(56) Entgegenhaltungen:
- WO-A2-2012/105083
- US-A- 5 179 670
- US-A1- 2010 265 891

## Beschreibung

Die Erfindung betrifft ein elektrisches Interfacemodul.

Aus dem Stand der Technik sind elektrische Interfacemodule bekannt. Diese werden häufig in größeren elektrischen Anlagen verbaut.

US 2010/0265891 offenbart elektrische Module, die drahtlose uplinkdownlink Verbindungen mit benachbarten Modulen feststellen. Elektrische Interfacemodule werden im Zusammenhang mit dieser Erfindung im Allgemeinen als elektronische Komponenten der Automatisierungstechnik verstanden, die beispielsweise in Schaltschränken von industriellen Anlagen verwendet werden. Beispielhafte elektrische Interfacemodule sind elektronische Schaltgeräte, Motorsteuerungen, (Ethernet-) Netzwerkelemente, Feldbus-Komponenten und - Systeme, I/O-Geräte, Relais- und Schutzgeräte, Geräte der industriellen Kommunikationstechnik, Geräte der Mess-, Steuer- und Regelungstechnik, sowie Geräte zum Monitoring und Geräte zur Signalisierung.

Dabei ergibt sich das Problem, dass diese Komponenten zum einen in Stromlaufplänen verzeichnet werden müssen, zum anderen auch bezeichnet werden müssen und auch in Bezug auf den Anschluss bzw. den Einbau umfassend mit Montageanweisungen versehen sein müssen. Auch ist einzelnen Komponenten ein Prüfprotokoll oder dergleichen beizufügen. Die Aufzeichnung einzelner Komponenten als auch die Anordnung von Bezeichnern ist aufwändig. Zudem ist in größeren Schaltanlagen bei vergleichsweise geringem Bauraum kaum noch Platz, um eine individuelle Bezeichnung anzubringen.

Im Installations- als auch Wartungsfall sind wegen des fehlenden Bauraums in aller Regel keine typspezifischen Montageanweisungen in Reichweite, so dass diese jeweils explizit mitgeführt werden müssen.

Die zunehmende Bauraumbeschränkung führt weiterhin dazu, dass auf Anzeigen weitestgehend verzichtet wird, da diese kostbaren Bauraum verwenden.

Gleichzeitig wäre es wünschenswert weitere Daten der Komponenten zu erhalten, um so einen Austausch bereits im Vorfeld planen oder einen bald bevorstehenden Ausfall auf Grund von tatsächlichen Alterungserscheinungen im Vorfeld zu erkennen und die betroffene Komponenten auszutauschen.

Zudem wäre es wünschenswert den Fehlerfall von Komponenten einfach auffinden zu können. Weiterhin wäre es wünschenswert die Konfiguration von Ersatzkomponenten einfach und schnell gestalten zu können.

Zudem wäre es wünschenswert allgemeine Daten, wie z.B. Zustandsdaten und/oder Fehlerdaten und/oder Konfigurationsdaten, aus den jeweiligen Komponenten auslesen zu können bzw. in diese Komponenten eingeben zu können. Dabei beschränkt die zunehmende Bauraumanforderung zunehmend die Bereitstellung von geeigneten Schnittstellen. Dieser Effekt wird zudem dadurch verstärkt, dass die Komponenten teilweise sehr unzugänglich verbaut sind, sodass es auch häufig an einer direkten Zugangsmöglichkeit fehlt.

Der Erfindung liegt die Aufgabe zu Grunde, ein verbessertes elektrisches Interfacemodul zur Verfügung zu stellen, das einen Nachteil oder mehrere Nachteile aus dem Stand der Technik in erfinderischer Weise umgeht.

Die Lösung der Aufgabe erfolgt erfindungsgemäß durch die Merkmale der unabhängigen Ansprüche. Vorteilhafte Ausgestaltungen der Erfindung sind insbesondere in den Unteransprüchen angegeben.

Nachfolgend wird die Erfindung unter Bezugnahme auf die anliegende Zeichnung anhand bevorzugter Ausführungsformen näher erläutert.

Es zeigt
- Fig. 1: eine schematische Darstellung eines elektrischen Interfacemoduls gemäß einer bevorzugten Ausführungsform der Erfindung,
- Fig. 2: eine explosionsartige schematische Darstellung einer beispielhaften Ausführungsform eines elektrischen Interfacemoduls gemäß der Erfindung,
- Fig. 3: eine explosionsartige schematische Darstellung einer weiteren beispielhaften Ausführungsform eines elektrischen Interfacemoduls gemäß der Erfindung,
- Fig. 4: eine explosionsartige schematische Darstellung einer Vielzahl von elektrischen Interfacemodulen gemäß beispielhaften Ausführungsformen der Erfindung in Bezug auf einen Aspekt der Erfindung,
- Fig. 5: eine schematische Darstellung von elektrischen Interfacemodulen zur Erläuterung der Positionsermittlung in einem ersten Ausführungsbeispiel,
- Fig. 6: eine schematische Darstellung von elektrischen Interfacemodulen zur Erläuterung der Positionsermittlung in einem zweiten Ausführungsbeispiel,
- Fig. 7: eine schematische Darstellung von elektrischen Interfacemodulen zur Erläuterung der Positionsermittlung in einem dritten Ausführungsbeispiel in einem fehlerfreien Zustand, und
- Fig. 8: eine schematische Darstellung von elektrischen Interfacemodulen zur Erläuterung der Positionsermittlung in dem dritten Ausführungsbeispiel in einem fehlerbehafteten Zustand.

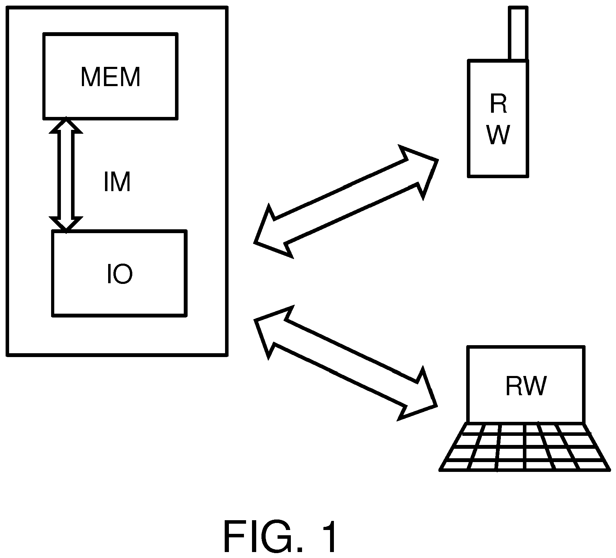

Die Figur 1 zeigt ein elektrisches Interfacemodul IM gemäß einer bevorzugten Ausführungsform der Erfindung.

Das elektrische Interfacemodul IM verfügt über eine Speichereinrichtung MEM zur Speicherung von Daten. Hierbei kann jede geeignete Form des Speichers verwendet werden. Beispielsweise kann als Speicher ein Flash-Speicher oder ein NAND-Speicher verwendet werden, da diese die Daten auch ohne Spannung halten können. Dies ist besonders hilfreich, wenn die entsprechende Komponente stromlos ist und keine Spannungsversorgung vorhanden ist.

Weiterhin weist das elektrische Interfacemodul IM auch eine integrierte drahtlose Schnittstelle IO auf, welche Daten an ein externes Lesegerät, bzw. Schreib- und Lesegerät RW bereitstellt. Zudem werden die Erfordernisse an eine galvanische Trennung leichter erreichbar.

Die drahtlose Schnittstelle IO kann z.B. als aktive oder passive NFC-Schnittstelle ausgestaltet sein. Bei einer passiven Ausgestaltung der NFC Schnittstelle IO bedarf diese keiner eigenen Spannungsversorgung, sondern die NFC-Schnittstelle IO wird aus der Funkenergie eines Lesegerätes oder Schreibgerätes bezogen. Dies ist besonders vorteilhaft, wenn die entsprechende Komponente stromlos ist bzw. keine funktionierende Spannungsversorgung (mehr) vorhanden ist.
Die Daten, welche an das externe Lesegerät RW bereitgestellt werden, sind ausgewählt aus einer Gruppe, welche aufweist: Produktdaten, insbesondere eine Seriennummer und/oder Chargennummer und/oder ein Herstellungsdatum und/oder eine Herstelleridentifikation und/oder einen Herstellungsort, eine Bedienungsanleitung, eine Montageanleitung, ein Verweis auf eine Internetseite, Prüfdaten, insbesondere Daten der Fertigungsendprüfung, Zustandsdaten, insbesondere Fehlerstatus, Degradation, Konfigurationsdaten, insbesondere Parametrierungsdaten.

Hiermit wird einem Verwender des erfindungsgemäßen elektrische Interfacemoduls IM eine Vielzahl von produktspezifischen Daten zur Verfügung gestellt, die es ihm erlauben einen gezielten Einsatz vorzusehen. Insbesondere wird die Inbetriebnahme einer Anlage deutlich vereinfacht, da nun nicht mehr Montagepläne vorgehalten werden müssen.

Weiterhin werden dem Verwender wichtige Zustandsdaten des elektrischen Interfacemoduls IM bereitgestellt, wie z.B. Fehlerstatus, Degradation, Konfigurationsdaten, insbesondere Parametrierungsdaten, die mit herkömmlichen Anzeigen nur schwer darstellbar sind, insbesondere unter der Randbedingung eines kleinen Bauraums.

In einer weiteren Ausgestaltung der Erfindung sind die Daten, welche an das externe Lesegerät RW bereitgestellt werden, ausgewählt aus einer Gruppe, welche aufweist: Daten einer Inbetriebnahme, Kennzeichnung eines Installationsortes, Daten einer Intervallprüfung, Statusanzeige, Auslesen über ein externes Lesegerät RW, Typ des verwendeten externen Lesegerätes RW, Klimadaten am Einbauort, insbesondere Temperatur und/oder Luftfeuchte, Netzspannungsfehler, Funktionsumfang, Parameterdaten, Ortskennung.

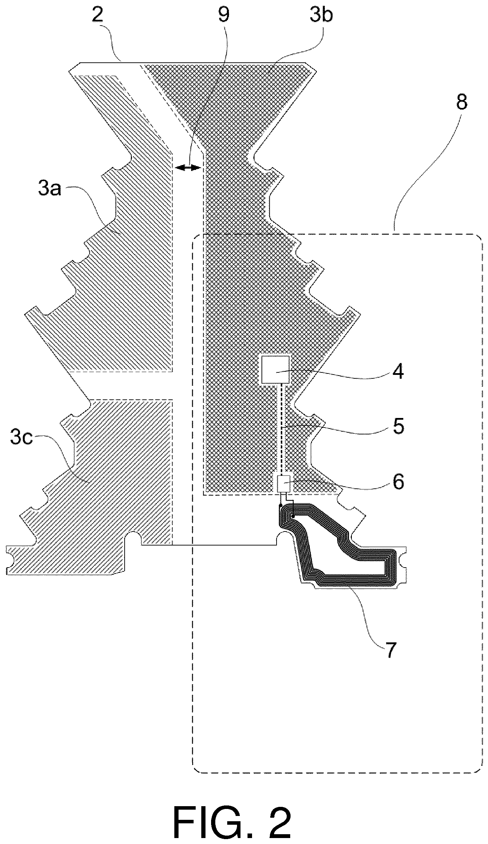

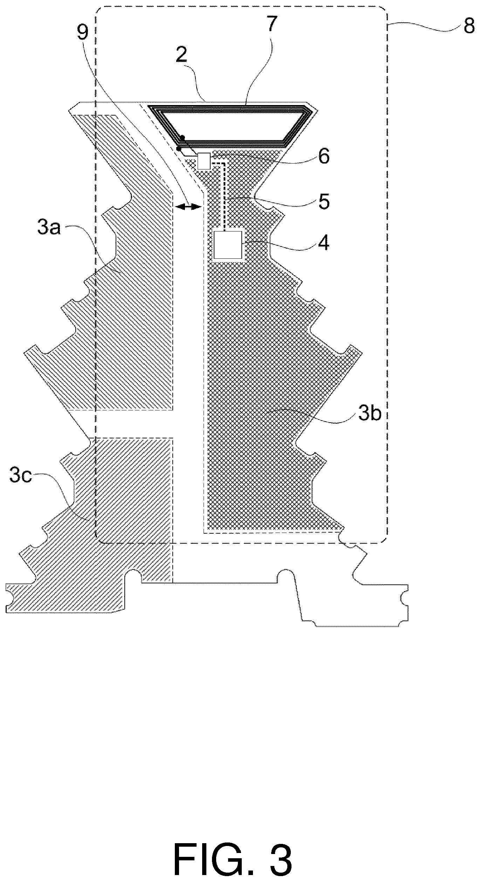

Diese Daten vereinfachen eine Überprüfung einer bestehenden Anlage. Weiterhin besteht die Möglichkeit zu unterscheiden, ob mittels eines besonderen Lesegerätes RW, wie z.B. mittels des in Figur 1 unten stilisierten Laptops, oder mit einer Smartphone-Anwendung, wie z.B. mittels des in Figur 1 oben bzw. in Figur 2 und 3 stilisierten Mobiltelefons 8, Daten ein oder ausgelesen werden. Die Erfindung ist jedoch nicht auf diese Ausführungsformen beschränkt sondern andere Ausführungsformen können z.B. einen Tablet-PC als Lesegerät 8 betreffen. Dabei kann die mögliche Orientierung des Lesegerätes RW, wie in Figur 2 und 3 in Bezug auf die jeweilige (planare) Antenne 7 gezeigt, unterschiedlich sein, wobei dies von der Ausgestaltung des jeweiligen Lesegerätes RW respektive des Mobiltelefons 8 und der jeweiligen elektrischen Interfacemodule IM abhängig sein kann.

In einer weiteren Ausgestaltung der Erfindung ist die integrierte drahtlose Schnittstelle IO so ausgestaltet, dass Daten von einem externen Schreibgerät RW bereitstellt und in der Speichereinrichtung MEM abgespeichert werden.

In dieser weiteren Ausgestaltung der Erfindung ist es bevorzugt, wenn die bereitgestellten Daten, welche von dem externen Lesegerät RW bereitgestellt werden, ausgewählt sind aus einer Gruppe, welche aufweist: Produktdaten, insbesondere eine Seriennummer und/oder Chargennummer und/oder ein Herstellungsdatum und/oder eine Herstelleridentifikation und/oder einen Herstellungsort, eine Bedienungsanleitung, eine Montageanleitung, ein Verweis auf eine Internetseite, Prüfdaten, insbesondere Daten der Fertigungsendprüfung, Daten zur Nachbestellung beim Hersteller. Durch die Bereitstellung eines Einschreibens von Daten wird es ermöglicht alle relevanten Produktionsdaten, insbesondere Prüfdaten und Seriennummern nach Produktion des elektrischen Interfacemoduls IM abzulegen, ohne dass es eines physikalisch kontaktbehafteten Zugangs zum Speicher MEM bedarf.

In dieser weiteren Ausgestaltung der Erfindung ist es ebenfalls bevorzugt, wenn die Daten, welche von dem externen Lesegerät RW bereitgestellt werden, ausgewählt sind aus einer Gruppe, welche aufweist: Daten einer Inbetriebnahme, Kennzeichnung eines Installationsortes, Daten einer Intervallprüfung, Auslesen über ein externes Lesegerät RW, Typ des verwendeten externen Lesegerätes RW. Diese Daten vereinfachen eine Überprüfung einer bestehenden Anlage.

In dieser weiteren Ausgestaltung der Erfindung ist es ebenfalls bevorzugt, wenn die Daten, welche von dem externen Lesegerät RW bereitgestellt werden, Konfigurationsdaten für die Betriebsweise des elektrischen Interfacemoduls IM enthalten. So können beispielsweise die Konfigurationsdaten verschiedene Temperaturkennlinien, Spannungs- oder Strombereiche oder andere kundenspezifische Einstellungen beinhalten. Hierdurch kann das elektrische Interfacemodul IM mit Hilfe der drahtlosen Schnittstelle IO personalisiert oder konfiguriert bzw. parametriert werden.

Dies ist insbesondere für den passiven Betriebsmodus der drahtlosen Schnittstelle IO vorteilhaft, da individuelle Konfigurationsdaten im Vorfeld, z.B. auch im verpackten Zustand des elektrischen Interfacemoduls IM, kontaktlos in den Speicher MEM geschrieben werden können und bei Inbetriebnahme für das Interfacemodul IM zur Verfügung stehen können.

Ohne weiteres kann vorgesehen sein, dass zumindest ein Teil der Daten, welche produktspezifisch sind, schreibgeschützt oder passwortgeschützt hinterlegt werden. Auch zumindest ein Teil der anlagenspezifischen Daten können schreibgeschützt oder passwortgeschützt hinterlegt werden. Dabei können unterschiedliche Schutzmechanismen und/oder Passwörter vorgesehen sein.

Zudem kann vorgesehen sein, dass der Datenbereich von Betriebsdaten bei Verwendung einer drahtlosen Schnittstelle nur ausgelesen werden können.

Obwohl das Schreibgerät als auch das Lesegerät als getrennte Geräte beschrieben sind, kann die Funktionalität auch in einem Gerät vereinigt verfügbar sein.

Mittels der erfindungsgemäßen elektrischen Interfacemodule IM können die Komponenten durch Datenübernahme zum einen einfach in Stromlaufplänen verzeichnet werden, zum anderen können aber auch die elektrischen Interfacemodule IM gemäß der Stromlaufpläne bezeichnet werden. Zudem lassen sich mittels des erfindungsgemäßen elektrischen Interfacemoduls IM auch Montageanleitungen in Bezug auf den Anschluss bzw. den Einbau bereitstellen, so dass diese stets am Ort des Einbaus vorhanden sind. Hierdurch wird eine getrennte Lagerung bzw. Bevorratung der Montageanweisungen unnötig. Zudem können den erfindungsgemäßen elektrischen Interfacemodulen IM jeweils ein Prüfprotokoll oder dergleichen beigefügt werden.

Insbesondere in größeren Schaltanlagen, in denen wenig Platz zur Verfügung steht, wird durch die Erfindung die Bezeichnung deutlich vereinfacht bzw. sinnvoll ermöglicht.

Zudem lassen sich mittels der erfindungsgemäßen elektrischen Interfacemodule IM auch weitergehende Anzeigen realisieren, die ansonsten auf Grund von Bauraumvorgaben nicht möglich wären. Insbesondere wird es durch die Erfindung ermöglicht weitere Daten des elektrischen Interfacemoduls IM zu erhalten, um so einen Austausch bereits im Vorfeld planen oder einen bald bevorstehenden Ausfall auf Grund von tatsächlichen Alterungserscheinungen im Vorfeld zu erkennen und die betroffene Komponenten auszutauschen.

Die Verwendung von drahtlosen Schnittstellen IO erweist sich zudem als vorteilhaft, da eine größere Datenmenge im Vergleich zu einer lokalen und auf Grund des zur Verfügung stehenden Bauraums kleinen Anzeige bereitgestellt werden kann. Insbesondere können die Daten als xml-Daten hinterlegt sein.

Die vorgestellte Bauweise erlaubt es insbesondere flache elektrische Interfacemodule IM herzustellen, wodurch der Platzbedarf minimiert wird und zugleich neue Funktionalität bereitgestellt werden kann. Insbesondere erlaubt die vorgestellte Bauweise elektrische Interfacemodule IM bereitzustellen, die eine Breite von weniger als 36 mm, insbesondere weniger als 23 mm, insbesondere weniger als 18 mm, insbesondere weniger als 13 mm aufweist, und besonders bevorzugt von weniger als 7 mm aufweisen.

Beispielsweise in der Ausführungsform mit 7 mm erlaubt die Bauweise einen zumindest einseitig SMD-bestückten Träger 2, beispielsweise eine Platine, der die drahtlosen Schnittstelle IO als auch die eigentlichen Interfaceelemente aufweist. Ohne weiteres kann dieser Träger 2 dann in einem schmalen Gehäuse angeordnet werden. Weiterhin sind auf dem Träger unterschiedliche Bereiche 3a, 3b, 3c gekennzeichnet, die z.B. für unterschiedliche Aufgaben des elektrischen Interfacemoduls bzw. der hierfür benötigten Komponenten zur Verfügung stehen. Alternativ oder zusätzlich können die unterschiedlichen Bereiche 3a, 3b und 3c auch unterschiedliche Potentialgruppen kennzeichnen, die beispielsweise galvanisch voneinander getrennt sind und mit Hilfe von Koppelelementen gekoppelt werden können. Eine solche beispielhafte Anordnung ist in den Figuren 2 und 3 gezeigt.

Zusätzlich kann auch ein drahtgebundenes Bussystem vorgesehen sein. Insbesondere kann auch ein beispielhaftes Bussystem vorgesehen sein, dass in der Montageschiene 11 befindlich ist und das von den einzelnen elektrischen Interfacemodulen IM beim Aufsetzen auf die Montageschiene 11 kontaktiert wird.

In einer weiteren Ausführungsform ist vorgesehen, dass der Träger 2 eine planare Antenne 7 für die integrierten drahtlosen Schnittstelle IO aufweist. Hierdurch wird zum einen ein verbesserter Austausch zwischen den einzelnen elektrischen Interfacemodulen IM ermöglicht und zum anderen flache elektrische Interfacemodule IM bereitgestellt.

Die integrierte drahtlosen Schnittstelle kann z.B., wie in den Figuren 2 und 3 schematisch gezeigt, aufgebaut sein. Dabei kann die drahtlosen Schnittstelle IO neben der eigentlichen Sende- und Empfangseinheit, welche z.B. in einem Chip 6 präsent ist, auch eine planare Antenne 7 aufweisen. Ohne weiteres kann der Chip 6 in einigen Ausführungsformen auch die Antenne 7 bereits integriert aufweisen oder eine Antenne kann als Komponente, beispielsweise als Spule, hinzugefügt werden. Offensichtlich kann solch eine Spule, die als Antenne 7 wirkt, auch als SMD-bestückbares Bauteil oder als Antenne im Kunststoffgehäuse oder mittels einer Folie an der Gehäusewand geklebt ausgeführt sein. Eine planare Antenne kann zudem auch als ein eigenständiges Bauteil ausgeführt sein, anderenfalls kann die planare Antenne 7 aber auch aus Leiterbahnen auf dem Träger 2 hergestellt sein. Zudem besteht mittels einer geeigneten Verbindung auch mit anderen Teilen auf dem elektrischen Interfacemodul IM Verbindung. Beispielhaft ist in den Figuren 2 und 3 eine Verbindung über eine weitere Schnittstelle 5 zu einem Controller 4 gezeigt. Beispielhafte Schnittstellen können neben einem 1-Wire Bus auch andere serielle oder parallele Schnittstellen oder andere Schnittstellen, wie z.B. einen I²C-Bus, aufweisen. Der Controller kann ein Mikrocontroller oder aber jede andere Logikschaltung sein.

In den Figuren 2 und 3 und 4 sind verschiedene Ausführungsformen in verschiedenen Ansichten gezeigt. Dabei ist das elektrische Interfacemodul IM zur Montage auf einer Montageschiene 11 geeignet. Eine beispielhafte Montageschiene 11 kann z.B. eine Hutschiene sein.

In der Ausführungsform, welche in Figur 2 gezeigt ist, ist die (planare) Antenne 7 im Nachbarbereich des Montagebereichs für die Montageschiene 11 angeordnet. Hierdurch verbleibt für die eigentlichen Interfacebausteine und die Anschlüsse bzw. Anzeigen im gegenüberliegenden Bereich mehr Bauraum.

In der Ausführungsform, welche in der Figur 3 gezeigt ist, ist die (planare) Antenne 7 in einem Bereich angeordnet, der dem Montagebereiche für die Montageschiene 11 gegenüberliegt. Hierdurch wird die Kommunikation mit einem externen Lesegerät RW erleichtert, so dass dieses bereits aus größerer Entfernung mit dem elektrischen Interfacemodul IM kommunizieren, d.h. Daten austauschen, kann.

Ohne weiteres ist für den Fachmann ersichtlich, dass auch andere Positionen zwischen diesen beiden Positionen für die (planare) Antenne 7 bzw. den Chip 6 vorgesehen sein können, um so von den jeweiligen Vorteilen zumindest teilweise zu profitieren.

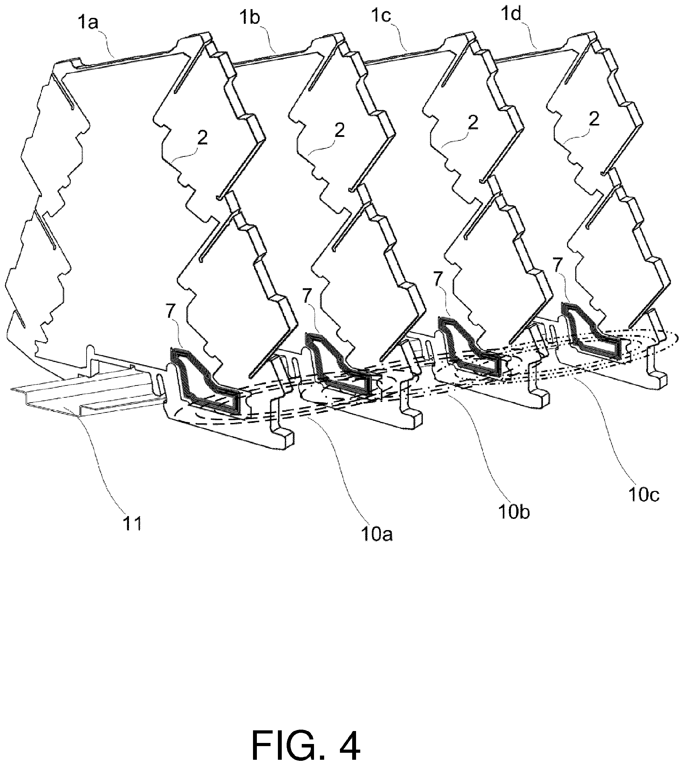

Dabei ist es von besonderem Vorteil, wenn benachbarte elektrische Interfacemodule IM so angeordnet sind, dass diese mit weiteren in der Nachbarschaft befindlichen elektrischen Interfacemodulen IM über die jeweils integrierte drahtlosen Schnittstelle IO Daten und/oder Energie austauschen können. Eine beispielhafte Anordnung hierzu ist in Figur 4 gezeigt, wobei hier der wünschenswerte - aber nicht notwendige Fall - der gleichartigen Anordnung der drahtlosen Schnittstellen zumindest in Bezug auf die jeweiligen (planaren) Antennen 7 gezeigt ist. Beispielhaft sind in Figur 4 aneinandergereihte elektrische Interfacemodule IM gezeigt, die jeweils ein eigenes Gehäuse 1a, 1b, 1c, ... aufweisen. Innerhalb des Gehäuses ist zumindest ein Träger 2 angeordnet, auf dem sich wiederum eine (planare) Antenne 7 befindet. Zur vereinfachten Darstellung sind nun jeweils beispielhafte magnetische Feldlinien dargestellt, wie sie sich beim Daten- und/oder Energieaustausch zwischen den einzelnen elektrischen Interfacemodulen IM ausbilden könnten. Z.B könnte sich von dem ersten Interfacemodul IM, welches in einem Gehäuse 1a befindlich ist, die Feldlinien 10a - dargestellte mittels gestichelter Linien - ausbilden. Diese Feldlinien 10a können z.B. in den Bereich der (planaren) Antenne 7 des zweiten, zum ersten direkt benachbarten, Interfacemoduls eingreifen, so dass mittels des Feldes Energie und / oder Daten zwischen den benachbarten Interfacemodulen ausgetauscht werden können. In gleicher Weise ist dies auch für das zweite Interfacemodul möglich, wobei hier zur Unterscheidung die magnetischen Feldlinien 10b mittels strich-punktierter Linien dargestellt sind. Ohne weiteres können die Feldlinien natürlich auch dergestalt sein, dass sie über ein benachbartes Interfacemodul hinaus auch Energie- und Daten übertragen können. So können z.B. Lücken und/oder fehlerhafte elektrische Interfacemodule überbrückt werden, und / oder, wie später noch beschrieben werden wird, sogar als fehlerhaft erkannt und / oder neu konfiguriert werden.

In einer beispielhaften Ausführung sind die benachbarten Interfacemodule IM so ausgestaltet, dass benachbarte elektrische Interfacemodule IM einen logischen Datenbus über die integrierten drahtlosen Schnittstellen IO bilden, der mittels mindestens eines Kopfmoduls oder eines Mastermoduls mit einer höheren Steuer- und/oder Überwachungseinrichtung angesprochen und/oder gesteuert werden kann. Beispielsweise kann eines der Interfacemodule zu der Funktion eines Mastermoduls bestimmt sein, oder aber, ein spezielles Kopfmodul, welches als Master fungiert, wird an einer Seite von benachbarten elektrischen Interfacemodulen IM oder zwischen benachbarte elektrische Interfacemodule IM eingebracht.

In einer Ausführungsform ist z.B. vorgesehen, dass benachbarte elektrische Interfacemodule IM ein Ad-Hoc-Netzwerk bilden, wobei eines der benachbarten elektrischen Interfacemodule IM eine Masterfunktion übernimmt und die anderen hierzu benachbarten elektrischen Interfacemodule IM eine Slavefunktion übernehmen. Beispielsweise kann in der Figur 4 das mittlere elektrischen Interfacemodul IM, welches durch das Gehäuse 1b stilisiert ist, oder aber eines der äußeren elektrischen Interfacemodule IM, welche durch eines der Gehäuse 1a oder 1c stilisiert sind, die Rolle des Masters übernehmen, während die jeweils verbleibenden gegenüber diesem elektrischen Interfacemodul als Slave funktionieren.

Die Auswahl des Masters kann z.B. auf Basis eines vorgegebenen Ablaufs bestimmt werden. Beispielsweise kann die Auswahl auf einem oder mehreren der nachfolgenden Kriterien basieren:
- Produktdaten
- Konfigurationsdaten
- erstes betriebsfähiges Interfacemodul
- Priorität
- Zeitablauf.

Dabei ist anzumerken, dass natürlich auch das Schreib- und / oder Lesegerät RW die Masterfunktion übernehmen kann, insbesondere im Fall der drahtlosen Schnittstellen IO.

Darüber hinaus könnte das Schreib- und/oder Lesegerät RW auch mit dem letzten Teilnehmer verbunden werden oder auch mit einem Kopfmodul.

Beispielhaft soll an Hand einer drahtlosen Schnittstelle IO eine Möglichkeit der Masterauswahl kurz aufgezeigt werden.

Dabei wird im Folgenden eine CAN-Basis für die drahtlosen Schnittstelle IO als ein Beispiel für ein Multimaster-System angenommen. Bei einer CAN-Basis für die drahtlosen Schnittstelle IO kann jeder Teilnehmer Master werden, d.h. das System ist ein sogenanntes Multimaster-System. Dabei senden die Teilnehmer des Multimaster-Systems, d.h. unter anderem die elektrischen Interfacemodule IM, Daten mit einer bestimmten ID, die die jeweils anderen Teilnehmer auswerten können.

Mit CAN lässt sich beispielsweise die Master-Funktion schnell festlegen, weil nur der den Buszugriff erhält, der bei gleichzeitigem Senden die höchste Priorität aufweist. Dies kann z.B. über die Adresse bestimmt sein, wobei beispielsweise die niedrigste Adresse der Busmaster ist. In diesem Fall können sich die anderen Teilnehmer zurückziehen.

Um dies zu realisieren kann in einer höheren Protokollschicht, z.B. auf der Anwendungsebene bzw. der Schicht 7 sichergestellt sein, dass die anderen Teilnehmer, d.h. beispielsweise weitere elektrische Interfacemodule IM nur dann selbst senden, wenn sie der jeweilige Master zum Senden auffordert. Für den Fall, dass der jeweilige Master ausfällt, kann dann vorgesehen sein, dass ein anderes elektrisches Interfacemodul IM diese Master-Funktion übernimmt.

Dies wäre z.B. dann vorteilhaft, wenn der Master bei einem Ausfall durch Zufall bestimmt würde, denn in diesem Fall, und, wenn das Mastermodul seine Übertragung nicht beenden kann, weil ein höherpriores Telegramm (z. B. CAN) festgestellt wurde, müssten die anderen Teilnehmer, d.h. beispielsweise die elektrischen Interfacemodule IM, warten, bis sie von dem neuen Master, der wiederum in gleicher Weise wie zuvor bestimmt worden sein kann, z.B. an Hand der höchsten Priorität, eine Aufforderung zur Übertragung oder dergleichen erhalten.

Dabei kann dann beispielsweise vorgesehen sein, dass in der höheren Protokollschicht auch sichergestellt wird, dass die auf Grund des Fehlers des vorherigen Masters nicht zum Zuge gekommenen elektrischen Interfacemodule IM mit SlaveFunktion nun erneut zum Senden aufgefordert werden.

Weiterhin kann vorgesehen sein, dass die benachbarten elektrischen Interfacemodule IM Daten mittels der drahtlosen Schnittstellen IO mittels eines höheren Netzwerkprotokolls austauschen, d.h. dass die drahtlosen Schnittstelle IO im ISO/OSI-Schichtenmodell lediglich eine oder mehrere der tieferen Schichten, z.B. den physical layer, zur Verfügung stellen, während die obere Schicht oder die oberen Schichten durch ein anderes Protokoll zur Verfügung gestellt werden. Beispielhafte höhere Netzwerkprotokolle sind z.B. Interbus, I²C-Bus, RS232, ASI, ..., wobei die physikalische Schicht dieser Netzwerkprotokolle beispielsweise durch die physikalische Schicht einer drahtlosen Schnittstelle IO bereitgestellt wird.

In Ausführungsformen der Erfindung kann zudem vorgesehen sein, dass das elektrische Interfacemodule IM zumindest Teile von Konfigurationsdaten zumindest eines direkt benachbarten elektrischen Interfacemoduls IM speichert und die Verfügbarkeit dieses direkt benachbarten elektrischen Interfacemoduls überwacht wird. In Figur 4 kann z.B. das elektrische Interfacemodul, das durch das Gehäuse 1b stilisiert ist, das direkt benachbarte elektrische Interfacemodule IM, welches durch das Gehäuse 1c stilisiert ist, überwachen bzw. zumindest einen Teil der Konfigurationsdaten hiervon speichern. Eine Überwachung kann auf unterschiedliche Weise realisiert werden, z.B. durch Überwachung, ob Kommunikation vorhanden ist, oder aber durch eine gezielte Abfrage. Obwohl im vorgezeichneten Beispiel lediglich eine Überwachung und Speicherung in eine Richtung erläutert wurde, kann natürlich auch vorgesehen sein, dass eine Überwachung auch des anderen benachbarten elektrischen Interfacemoduls IO/1a realisiert wird. Weiterhin kann diese Überwachung auch so ausgestaltet sein, dass sie nicht nur die direkt benachbarten elektrischen Interfacemodule sondern auch weiter entfernte elektrische Interfacemodule erfasst. Z.B. könnte es vorgesehen sein, dass das erste Interfacemodule IM/1a in Figur 4 auch noch das elektrische Interfacemodul IM/1c überwacht.

Wird nun festgestellt, dass das benachbarte elektrische Interfacemodul IM defekt ist, so kann der Fehler an weitere Interfacemodule weitergegeben werden. Insbesondere kann ein Fehler an ein Mastermodul und/oder ein Kopfmodul weitergegeben und zur Anzeige gebracht werden. Alternativ oder zusätzlich kann auch vorgesehen sein, dass der Fehler an weitere Einrichtungen z.B. eine Überwachungseinrichtung weitergeleitet wird.

Wird nun das betroffene elektrische Interfacemodul ausgetauscht, so kann vorgesehen sein, dass das speichernde elektrische Interfacemodul IM/1b nun dieses ersatzweise eingefügte elektrische Interfacemodul IM/1c optional auf Eignung in Bezug auf die gespeicherten Konfigurationsdaten überprüft mittels Kommunikation über die drahtlosen Schnittstelle IO.

Falls eine solche Prüfung vorgesehen und erfolgreich war, kann nun vorgesehen sein, dass die gespeicherten Konfigurationsdaten an das ausgetauschte elektrische Interfacemodul übertragen werden. Natürlich kann dieser Schritt auch unabhängig von einer Prüfung vorgesehen sein.

Weiterhin kann zudem vorgesehen sein, dass erst wenn die Konfiguration abgeschlossen ist und die nun erfolgte Konfiguration an die jeweiligen speichernden benachbarten elektrischen Interfacemodule übertragen wurde, dass diese nun die erhaltene Konfiguration mit der noch gespeicherten Konfiguration vergleichen und nur bei einer erfolgreichen gleichartigen Konfiguration eine Betriebsfreigabe des ausgetauschten Interfacemoduls ermöglichen, z.B. durch entsprechende Signalisierung mittels der drahtlosen Schnittstelle IO. Ein derartiges Verfahren könnte z.B. für sichere (Sub-) Systeme mit einem vorbestimmten - Safety Integrity Level - z.B. SIL nach IEC 61508 vorteilhaft sein. Zudem wird der Austausch von defekten elektrischen Interfacemodulen erheblich erleichtert, da nun keine weitere Einflussnahme von außen notwendig ist und so der Aufwand für eine sonst nötige erneute Konfiguration entfällt.

In einer weiteren Ausgestaltung wird auch die Ermittlung eines Fehlerortes eines ausgefallenen elektrischen Interfacemoduls IM innerhalb einer Vielzahl von benachbarten elektrischen Interfacemodulen IM ermöglicht.

Eine Möglichkeit zur Bestimmung des Fehlerortes ist, dass benachbarte elektrische Interfacemodule IM eine logische Kette bilden. Dann kann z.B. das erste elektrische Interfacemodul IM oder ein Kopfmodul KM oder ein Mastermodul die Länge der Kette dadurch bestimmen, dass ein Weitergabesignal in der Kette solange von einem elektrischen Interfacemodul IM zum nächsten logischen elektrischen Interfacemodul IM weitergegeben wird bis entweder das Ende der Kette erreicht ist oder aber bis die Weitergabe ohne Rückmeldung bleibt. Z.B. kann das Weitergabesignal einen Zähler beinhalten, der jeweils bei erfolgreicher Weitergabe inkrementiert oder dekrementiert wird. Das logisch letzte Glied, das dann noch erreichbar ist, gibt seinen Platz in der logischen Kette wieder zurück, sodass das jeweilige erste elektrische Interfacemodul oder das Mastermodul oder das Kopfmodul nun an Hand der vorbekannten Länge der logischen Kette vergleichen kann, ob diese mit der bestimmten Länge der Kette übereinstimmt, und falls nicht an Hand des zurückgemeldeten letzten Platzes nun der Ort des Fehlers als unmittelbar nachfolgend zu dem letzten antwortenden Glied in der Kette identifizierbar ist.

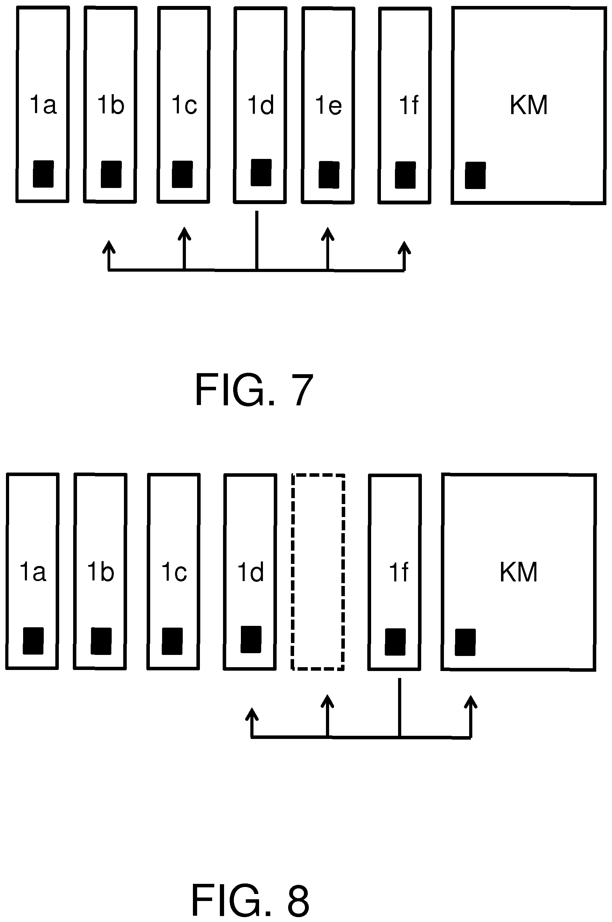

In anderen alternativen oder zusätzlichen Ausgestaltungen kann auch vorgesehen sein, dass die unmittelbar benachbarten elektrischen Interfacemodule IM den Zustand eines elektrischen Interfacemoduls IM wie bereits beschrieben überwachen und im Falle einer Fehlfunktion, den Fehler an das erste elektrische Interfacemodul (z.B. 1f in Figur 7 oder 8) oder das Mastermodul oder das Kopfmodul KM weitermelden.

Im Falle, dass das Mastermodul ausfällt kann vorgesehen sein, dass das benachbarte oder auch ein anderes elektrisches Interfacemodul IM diese Funktion übernimmt.

Es könnte auch sein, dass bei einem Fehler innerhalb der Station, die Station in zwei bzw. n autarke Teilsysteme aufgeteilt und die lokale Bearbeitung z. B. mit Ausnahme des ausgefallenen Gerätes fortgesetzt wird.

Mittels der Erfindung wird zudem ein elektrisches Interfacemodul IM bereitgestellt, das eine Speichereinrichtung MEM zur Speicherung von Daten und eine integrierte drahtlose Schnittstelle IO aufweist. Die Daten werden dabei an ein externes Lesegerät RW bereitgestellt. Das elektrische Interfacemodul IM beinhaltet beispielsweise einen Träger 2, auf dem die Speichereinrichtung MEM und die integrierte drahtlose Schnittstelle IO angeordnet sind. Das elektrische Interfacemodul IM ist in der Lage mit weiteren in der Nachbarschaft befindlichen elektrischen Interfacemodulen IM über die integrierte drahtlose Schnittstelle IO Daten auszutauschen. Dabei bilden benachbarte elektrische Interfacemodule IM einen logischen bidirektionalen Datenbus über die jeweiligen integrierten drahtlosen Schnittstellen IO, wobei Daten von dem einen in der Nachbarschaft befindlichen elektrischen Interfacemodul IM oder den weiteren in der Nachbarschaft befindlichen elektrischen Interfacemodulen IM über die integrierte(n) drahtlose(n) Schnittstelle(n) IO Bus-artig an das externe Lesegerät RW entweder unmittelbar oder mittelbar über ein Kopfmodul KM bereitgestellt werden, wobei jedes elektrische Interfacemodul IM eine eindeutige Identifikation über die integrierte drahtlose Schnittstelle IO zur Verfügung stellt, sodass jedes elektrische Interfacemodul IM eindeutig identifizierbar ist.

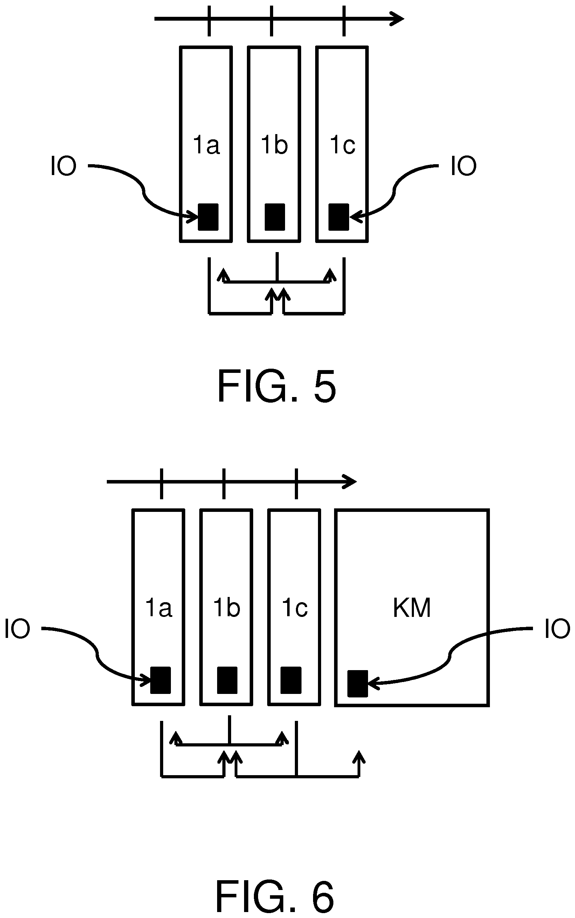

In der Figur 5 ist eine Anordnung von 3 elektrischen Interfacemodulen beispielhaft an Hand der äußeren Gehäuseformen 1a, 1b, 1c jeweils stellvertretend für eine elektrisches Interfacemodul IM gezeigt. Im Folgenden wird das Referenzzeichen für eine Gehäuseform stellvertretend auch für je ein elektrisches Interfacemodul verwendet werden. Dabei weist jedes der elektrischen Interfacemodule IM eine als schwarzes Rechteck symbolisch dargestellte drahtlose Schnittstelle IO auf. Wie durch die Pfeile unterhalb der elektrischen Interfacemodule 1a, 1b, 1c angezeigt ist, kann das elektrische Interfacemodul 1a mit dem elektrischen Interfacemodul 1b bidirektional kommunizieren. Auch das elektrische Interfacemodul 1c kann mit dem elektrischen Interfacemodul 1b bidirektional kommunizieren. Aufgrund des räumlichen Abstands und der physikalischen Reichweitebeschränkung kann beispielsweise das elektrische Interfacemodul 1a nicht direkt mit dem elektrischen Interfacemodul 1c bidirektional kommunizieren. Über den hierbei gebildeten BUS, beispielhaft dargestellt als Pfeil oberhalb der elektrischen Interfacemodule, kann nun das elektrische Interfacemodule 1a unter Mithilfe des elektrischen Interfacemoduls 1b mit dem elektrischen Interfacemodul 1c und umgekehrt kommunizieren, d.h. Daten austauschen. Nun kann an irgendeiner Stelle mittels eines externen Lesegerätes RW dieser BUS (drahtlos) verbunden werden, sodass alle Geräte des Busses nun Daten an das externe Lesegerät RW bereitstellen können und/oder alle elektrischen Interfacemodule 1a, 1b, 1c auch Daten von einem externen Schreibgerät RW erhalten können, ohne dass jedes der elektrischen Interfacemodule 1a, 1b, 1c einzeln angekoppelt werden müsste. Hierdurch wird die Handhabbarkeit deutlich verbessert.

Die Weitergabe von Daten von einem elektrischen Interfacemodul IM an ein anderes elektrisches Interfacemodul IM, welches sich außerhalb dessen Reichweite befindet, kann dabei unterschiedlich ausgestaltet sein. Bevorzugt ist jedoch, dass ein oder mehrere elektrische Interfacemodule IM, welche sich räumlich zwischen dem sendenden und dem empfangenden elektrischen Interfacemodul IM befinden, die empfangenen Daten Repeater-artig weiterreichen.

In anderen Ausführungsformen, z.B. mit einem umlaufenden Telegramm, kann vorgesehen sein, dass Daten in bestimmte Bereiche einer Nachricht eingegeben werden, d.h. jedem elektrischen Interfacemodule IM steht ein bestimmter Abschnitt innerhalb eines solchen umlaufenden Telegramms zur Verfügung.

In der Ausführungsform der Figur 5 sind die einzelnen elektrischen Interfacemodule IM befähigt eine relative Lage zueinander zu bestimmen. So ist das elektrische Interfacemodul 1a in der Lage zu erkennen, dass es auf Grund der beschränkten Reichweite typischer Nahfeldkommunikationsschnittstellen IO nur mit exakt einem weiteren elektrischen Interfacemodul 1b kommunizieren kann. Gleiches gilt für das elektrische Interfacemodul 1c. D.h. beide elektrischen Interfacemodule 1a, 1c liegen am Rand. Das elektrische Interfacemodul 1b hingegen kann bei gleicher Reichweite der drahtlosen Schnittstelle IO zwei elektrische Interfacemodule 1a und 1c erreichen, so dass hieraus abgeleitet werden kann, dass bei einer Reichweite bis zu einem benachbarten elektrischen Interfacemodul IM das elektrische Interfacemodul 1b eine Mittellage einnimmt.

Beispielsweise kann ein elektrisches Interfacemodul (IM) eine Nachricht eines in der Nachbarschaft befindlichen elektrischen Interfacemoduls aufnehmen, wobei die Nachricht die eindeutige Identifikation des sendenden elektrischen Interfacemoduls aufweist. Anschließend wird eine vorbestimmte Zeit gewartet, ob weitere in der Nachbarschaft befindliche elektrische Interfacemodule innerhalb der vorbestimmten Zeit eine weitere Nachricht senden, wobei diese Nachricht ebenfalls die eindeutige Identifikation des nunmehr sendenden elektrischen Interfacemoduls aufweist. Nach Ablauf der vorbestimmten Zeit kann nun das elektrische Interfacemodule (IM) an Hand der Anzahl der aufgenommenen eindeutigen Identifikation bzw. der aufgenommenen eindeutigen Identifikationen auswerten, ob das aufnehmende elektrische Interfacemodul eine Mittellage oder eine Randlage in Bezug auf benachbarte elektrische Interfacemodule aufweist.

In Figur 6 ist im Unterschied zu Figur 5 ein Kopfmodul KM vorgesehen. Nun kann z.B. das externe Lesegerät RW bzw. das externe Schreibgerät RW wie zuvor beschrieben an den BUS alternativ über das Kopfmodul KM angekoppelt werden.

In der Ausführungsform der Figur 6 kann zusätzlich aus der Kenntnis eines Kopfmoduls KM, eine absolute Lage bestimmt werden, da nun das elektrische Interfacemodul 1c das einzige elektrische Interfacemodul ist, das mit dem Kopfmodul KM und einem weiteren elektrischen Interfacemodul 1b direkt kommunizieren kann. Diese Information kann nun bei der weiteren Erkennung verwendet werden, um die elektrischen Interfacemodule in eine logische Ordnung entsprechend ihrer physikalischen Anordnung (z.B. beginnend vom Kopfmodul KM aus) zu bringen. Dies ermöglicht z.B. im Fehlerfall eine genaue Lokalisierung eines Fehlereignisses.

Aber auch für den Nichtfehlerfall ist die Möglichkeit der Lokalisierung von Vorteil, denn aus der Lokalisierung der einzelnen elektrischen Interfacemodule kann beispielsweise ein virtuelles Abbild der Einbausituation ermöglicht werden, z.B. kann auf einem externen Lesegerät RW die logische Ordnung entlang einer Montageschiene, auf der die entsprechenden elektrischen Interfacemodule IM und gegebenenfalls ein Kopfmodul KM angeordnet sind, visualisiert werden.

Es sei weiter angemerkt, dass auch das externe Lesegerät RW die Funktion des Kopfmoduls KM übernehmen kann, sodass das Ankoppeln eines externen Lesegerätes RW gleichfalls es ermöglicht die logische Ordnung entlang einer Montageschiene, auf der die entsprechenden elektrischen Interfacemodule IM und gegebenenfalls ein Kopfmodul KM angeordnet sind, zu visualisieren bzw. einen Fehlerort räumlich zu bestimmen.

Beispielsweise kann vorgesehen sein, dass das elektrische Interfacemodul eine Information von einem Kopfmodul (KM)oder einem Lesegerät (RW) erhält, dass das elektrische Interfacemodul (IM) das erste elektrische Interfacemodule einer logischen Kette sein soll, und somit ein logisches Abbild der physikalischen Anordnung der benachbarten elektrischen Interfacemodule an Hand der Anzahl und Identifikation der über die drahtlose Schnittstelle zu einem ersten Zeitpunkt erkannten benachbarten elektrischen Interfacemodule erstellen kann.

Beispielsweise überwacht das elektrische Interfacemodul 1d in Figur 7 bzw. Figur 8 das Funktionieren der benachbarten elektrischen Interfacemodule 1c und 1e (bzw. auch gegebenenfalls 1b und 1f oder je nach Reichweite noch weiter entfernte Module).

Diese Überwachung kann dabei z.B. durch das auf dem BUS verwendete Bussystem begünstigt werden. Werden z.B. periodisch Daten ausgetauscht, so kann das Ausbleiben einer Nachricht oder einer Antwort auf eine Nachricht als Fehlerfall gelten. In anderen Fällen wird jedes elektrische Interfacemodul auf Aktivität in einem bestimmten Zeitraum überwacht und falls keine Aktivität feststellbar ist, wird das überwachte elektrische Interfacemodul aktiv abgefragt.

Wird nun ein Fehlerfall eines der benachbarten elektrischen Interfacemodule (in Figur 8 elektrisches Interfacemodul 1e) erkannt, so kann der erkannte Fehler weitergemeldet werden. Dabei kann sowohl eine Weitermeldung nur innerhalb des Busses BUS als auch eine Weiterleitung an ein eventuell vorhandenes Kopfmodul KM bzw. eine externes Lesegerät RW vorgesehen sein.

D.h., beispielsweise kann an Hand der Anzahl der über die drahtlose Schnittstelle IO zu einem ersten Zeitpunkt erkannten benachbarten elektrischen Interfacemodule und der Anzahl der zu einem nachfolgendem zweiten Zeitpunkt erkannten benachbarten elektrischen Interfacemodule ein Fehlerfall erkannt werden.

In der Ausführungsform der Figur 5 ist überdies auch eine relative Lokalisierung des Fehlers möglich, z.B. kann jeweils ein unmittelbar benachbartes elektrisches Interfacemodule IM zum Fehlerort ermittelt werden. In der Ausführungsform der Figur 6 kann zudem ein absoluter Fehlerort angegeben werden.

In Figur 7 und Figur 8 ist nun angenommen, dass die Reichweite der drahtlosen Schnittstelle IO z.B. (jeweils) zwei benachbarte elektrische Interfacemodule umfasst. Dies ist in Figur 7 und Figur 8 dadurch dargestellt, dass die Signalstärke als Pfeillänge dargestellt wurde. D.h. in Figur 7 erkennt das elektrische Interfacemodul nicht nur die unmittelbar benachbarten elektrischen Interfacemodule 1c und 1e sondern auch die etwas weiter entfernt liegenden elektrischen Interfacemodule 1f bzw. 1b.

Das elektrische Interfacemodul 1d überwacht nun das Funktionieren dieser benachbarten elektrischen Interfacemodule.

Diese Überwachung kann dabei z.B. durch das auf dem BUS verwendete Bussystem begünstigt werden. Werden z.B. periodisch Daten ausgetauscht, so kann das Ausbleiben einer Nachricht oder einer Antwort auf eine Nachricht als Fehlerfall gelten. In anderen Fällen wird jedes elektrische Interfacemodul auf Aktivität in einem bestimmten Zeitraum überwacht und falls keine Aktivität feststellbar ist, wird das überwachte elektrische Interfacemodul aktiv abgefragt.

Wird nun ein Fehlerfall eines der benachbarten elektrischen Interfacemodule erkannt, so kann der erkannte Fehler weitergemeldet werden. Dabei kann sowohl eine Weitermeldung nur innerhalb des Busses BUS als auch eine Weiterleitung an ein eventuell vorhandenes Kopfmodul KM bzw. eine externes Lesegerät RW vorgesehen sein.

D.h., beispielsweise kann an Hand der Anzahl und Identifikation der über die drahtlose Schnittstelle IO zu einem ersten Zeitpunkt erkannten benachbarten elektrischen Interfacemodule und der Anzahl der zu einem nachfolgendem zweiten Zeitpunkt erkannten benachbarten elektrischen Interfacemodule ein Ort eines Fehlerfall erkannt werden.

In Figur 8 ist beispielsweise das elektrische Interfacemodul 1e aus Figur 7 defekt geworden oder gezielt entnommen worden.

Nachfolgend ist hierzu in Tabelle 1 eine Erkennungsmatrix der einzelnen elektrischen Interfacemodule zu einem ersten Zeitpunkt entsprechend der Figur 7 angegeben.

**Tabelle 1**

| Hörer Sender | 1a | 1b | 1c | 1d | 1e | 1f |
|---|---|---|---|---|---|---|
| 1a | | X | X | | | |
| 1b | X | | X | x | | |
| 1c | X | X | | x | X | |
| 1d | | X | X | | X | X |
| 1e | | | X | x | | X |
| 1f | | | | x | X | |

Dabei ist wiederum angenommen, dass jedes elektrische Interfacemodul IM aufgrund der beschränkten Reichweite der drahtlosen Schnittstelle IO in jede Richtung (nur) mit jeweils maximal zwei benachbarten elektrischen Interfacemodulen kommunizieren kann.

Aus dieser Matrix lassen sich die Nachbarschaftsverhältnisse auf Grund der Anzahl und der Identifizierung der einzelnen elektrischen Interfacemodule eindeutig ableiten. Dies kann auch durch eine qualitative Angabe in Bezug auf die gemessene Feldstärke eines Signales weiter unterstützt werden, sodass die einzelnen elektrischen Interfacemodule IM ihre räumliche Beziehung bzw. ihren gegenseiteigen Abstand exakter erfassen können. Zudem erlaubt eine Messung von Feldstärken auch die Ableitung weiterer Daten, wie z.B. das Vorhandensein vom Fremdobjekten oder Fehlstellen. Dies ist z.B. dadurch möglich, dass anstatt zweier benachbarter elektrischer Interfacemodule nur eine einziges erkannt wird (Z.B. in Figur 8 unter der Annahme, dass elektrische Interfacemodul 1e nicht eingebaut war, könnte die Fehlstelle durch das elektrische Interfacemodul 1f bzw. 1d erkannt werden).

Mit Hilfe der Abstandsinformationen - z.B. über Feldstärkemessungen - können beispielsweise auch breitere Interfacemodule erkannt werden. Dies kann beispielsweise auch dadurch unterstützt werden, dass jedes Modul seine aktuelle Einbaubreite über das Bussystem mitteilt.

Tritt nun ein Fehler in elektrischem Interfacemodul 1e entsprechend Figur 8 auf, so ergibt sich nun im Unterschied zur Tabelle 1, die nachfolgende Tabelle 2.

**Tabelle 2**

| Hörer Sender | 1a | 1b | 1c | 1d | (1e) | 1f |
|---|---|---|---|---|---|---|
| 1a | | X | X | | | |
| 1b | X | | X | x | | |
| 1c | X | X | | x | - | |
| 1d | | X | X | | - | X |
| 1e | | | - | - | | - |
| 1f | | | | x | - | |

D.h. nun kann zum einen die Fehlstelle erkannt werden, nämlich zwischen elektrischem Interfacemodul 1d und 1f, als auch aus dem Vergleich mit der Tabelle 1 abgeleitet werden, dass das elektrische Interfacemodul 1e defekt ist oder entnommen wurde.

Beispielsweise kann ein elektrisches Interfacemodul bei Erhalt einer Nachricht auch eine Feldstärke einer aufgenommen Nachricht bestimmen, und so nach Ablauf der vorbestimmten Zeit bei der Auswertung weiterhin an Hand der Feldstärke eine benachbarte Leerstelle bzw. eine größere räumliche Entfernung erkennen.

In einer besonders vorteilhaften Ausführungsform ist vorgesehen, dass das elektrische Interfacemodul IM mit dem einen weiteren in der Nachbarschaft befindlichen elektrischen Interfacemodul IM oder den weiteren in der Nachbarschaft befindlichen elektrischen Interfacemodulen IM über die integrierte drahtlose Schnittstelle IO Energie austauschen kann. Hierdurch wird ein autarker Betrieb z.B. von Überwachungseinrichtungen innerhalb der elektrischen Interfacemodule ermöglicht, sodass z.B. keine Hilfsenergie abgezweigt werden muss.

Besonders vorteilhaft erweist sich dies in einem Fehlerfall des elektrischen Interfacemoduls IM.

Verliert das elektrische Interfacemodul IM im Fehlerfall auch sein (Hilfs-) Energieversorgung für die Schnittstelle aus dem elektrische Interfacemodul IM heraus, so kann nun alternativ oder zusätzlich Energie über die integrierte drahtlose Schnittstelle IO bezogen werden.

Dabei ist angenommen, dass im Fehlerfall die drahtlose Schnittstelle IO selbst nicht fehlerbehaftet ist. Dann kann die über die drahtlose Schnittstelle IO "gewonnene" Energie zur Übertagung von Daten, z.B. von Fehlerdaten oder zuletzt bekannten Konfigurationsdaten, des elektrischen Interfacemoduls IM an benachbarte elektrische Interfacemodule IM verwendet werden. Hierdurch wird die Fehlersuche als auch eine Neukonfiguration nach Austausch des betroffenen elektrischen Interfacemoduls deutlich erleichtert.

Die Erfindung nutzt somit ein an sich für eine ständig wechselnde Umgebung geschaffene drahtlose Infrastruktur für eine eher statische Anwendung. Dabei werden jedoch insbesondere Reichweiteneigenschaften der drahtlosen Schnittstelle IO zur Lokalisierung von Fehlern oder Fehlstellen ausgenutzt. Die drahtlose Schnittstellen IO der einzelnen elektrischen Interfacemodule IM stellen dabei eine bidirektionale Datenverbindung zur Verfügung.

Dabei können die elektrischen Interfacemodule IM ein Bussystem mit mehreren Teilnehmern bilden, wobei die elektrischen Interfacemodule IM eindeutig identifizierbar sind.

Daten unterschiedlichster Art können nun entlang einer virtuellen "Kette", welche aus der Nachbarschaftsbeziehung der elektrischen Interfacemodule IM über die jeweiligen drahtlosen Schnittstellen IO entsteht, übermittelt werden. Hierdurch kann die physikalisch bedingt beschränkte Reichweite der drahtlosen Schnittstelle IO von typischerweise wenigen Zentimetern überwunden werden, da die Kommunikation mit den benachbarten elektrischen Interfacemodulen IM und eine anschließende Weiterreichung der Daten eine Vergrößerung der Reichweite bereitstellt.

Zudem kann die physikalisch bedingt beschränkte Reichweite der drahtlosen Schnittstelle IO dazu genutzt werden, um eine relative Positionierung entlang einer Kette zu ermitteln.

Dabei stellt die Erfindung ein selbstkonfigurierendes System zur Verfügung, wobei neu eingefügte elektrische Interfacemodule IM (oder auch ein neu eingefügtes Kopfmodul KM) erkannt werden können und zu dem Bussystem hinzugefügt werden (Hot-Plug-Fähigkeit). Andererseits können aber auch defekte elektrische Interfacemodule IM oder elektrische Interfacemodule IM mit Fehlfunktionen von benachbarten funktionierenden elektrische Interfacemodule IM oder einem Kopfmodul KM erkannt und gemeldet werden. Dabei kann die Meldung zum einen innerhalb des Busses BUS verbleiben oder aber an ein Kopfmodul KM und/oder an ein externes Lesegerät RW weitergegeben werden.

Zwar werden typischerweise die drahtlosen Schnittstellen IO durch das eigene elektrische Interfacemodule IM mit Hilfsenergie versorgt, jedoch kann optional vorgesehen sein, dass die Energie auch über das magnetische Feld eines benachbarten elektrischen Interfacemoduls (oder mehrerer benachbarter elektrischer Interfacemodule) IM bereitgestellt wird.

Die drahtlose Schnittstelle IO kann sowohl aktiv als auch passiv ausgestaltet sein. Zudem können die einzelnen elektrische Interfacemodule IM im Verlaufe ihres Einsatzes auch verschiedene Rollen einnehmen, beispielsweise kann ein elektrisches Interfacemodule IM zunächst ein Masterartiger Initiator sein und benachbarte elektrische Interfacemodule IM abfragen, danach kann ein Rollentausch stattfinden und das initiierende elektrische Interfacemodul IM kann zu einem Slave werden.

Über den BUS können einerseits Konfigurationsdaten aber auch (quasi-) kontinuierliche Datenströme der elektrische Interfacemodule IM selber ausgetauscht werden. Diese Daten können beispielsweise Nutzsignale der Module sein. So kann z.B. ein am Eingang eines Interfacemoduls liegendes Normsignal (z.B. 4 mA - 20 mA) in digitalisierter Form über den Datenbus übertragen und extern weiterverarbeitet werden. Es ist zudem möglich, globale Nachrichten zu senden, z.B. Konfigurationsdaten oder Abschaltdaten, z.B. im Fehlerfall, der von einer (externen) Steuerung angezeigt wird.

Ohne weiteres kann der Bus mit einem oder mehreren Kopfmodulen KM ausgestattet sein. Das Kopfmodul KM kann die Daten an ein übergeordnetes System weiterreichen oder mit anderen Kommunikationsschnittstellen, wie z.B. weiteren Funkschnittstellen wie WLAN oder Bluetooth, ausgestattet sein oder aber eine bessere Zugänglichkeit zu einem (drahtlos angebundenen) externen Lesegerät RW bieten.

Soweit vorstehend auf eine drahtlose Schnittstelle Bezug genommen wurde, ist die Erfindung nicht auf NFC beschränkt, sondern lediglich ein Beispiel für eine Nahfeldübertragungstechnik. Eine andere beispielhafte Nahfeldübertragungstechnik ist beispielsweise RFID im kHz- und MHz Bereich, die als eine Alternative zu NFC verwendet werden kann.

Es können auch andere Übertragungstechniken wie ZigBee, Bluetooth Low Energy oder UHF-RFID zum Einsatz kommen, die nicht direkt auf Nahfeldübertragungstechnik beruhen, sondern durch entsprechende Sendeleistungen und Antennenformen nur für kurze Distanzen konzipiert bzw. optimiert sind.

**Bezugszeichenliste**

| | |
|---|---|
| Elektrisches Interfacemodul | IM |
| Speicher | MEM |
| drahtlose Schnittstelle, NFC- / RFID-Schnittstelle | IO |
| Schreibgerät, Lesegerät | RW |
| Gehäuse | 1; 1a, 1b, 1c, 1d, 1e, 1f |
| Träger | 2 |
| Komponentenbereiche | 3a, 3b, 3c |
| Controller | 4 |
| Schnittstelle | 5 |
| Schnittstellen-Chip | 6 |
| Antenne (planar) | 7 |
| Mobiltelefon, Smartphone, Tablet-PC | 8 |
| (magnetische) Feldlinien | 10a, 10b, 10c |
| Montageschiene | 11 |
| Kopfmodul | KM |

## Patentansprüche

1. Elektrisches Interfacemodul (IM), wobei das elektrische Interfacemodul (IM) ausgewählt ist aus einer Gruppe aufweisend elektronische Schaltgeräte, Motorsteuerungen, (Ethernet-) Netzwerkelemente, Feldbus-Komponenten und -Systeme, I/O-Geräte, Relais- und Schutzgeräte, Geräte der industriellen Kommunikationstechnik, Geräte der Mess-, Steuer- und Regelungstechnik, sowie Geräte zum Monitoring und Geräte zur Signalisierung, **dadurch gekennzeichnet, dass** das elektrische Interfacemodul (IM) eine Speichereinrichtung (MEM) zur Speicherung von Daten und eine integrierte drahtlose Schnittstelle (IO) aufweist, welche Daten an ein externes Lesegerät (RW) und/oder ein Kopfmodul (KM) bereitstellt, wobei das elektrische Interfacemodul (IM) auf einer Montageschiene (11) anbringbar ist, wobei das elektrische Interfacemodul (IM) mit weiteren in der Nachbarschaft auf der Montageschiene (11) befindlichen elektrischen Interfacemodulen (IM) über die integrierte drahtlose Schnittstelle (IO) Daten austauschen kann, wobei benachbarte elektrische Interfacemodule (IM) einen logischen bidirektionalen Datenbus über die integrierten drahtlosen Schnittstellen (IO) bilden, wobei Daten von dem einen in der Nachbarschaft befindlichen elektrischen Interfacemodul (IM) oder den weiteren in der Nachbarschaft befindlichen elektrischen Interfacemodulen (IM) über die integrierte(n) drahtlose(n) Schnittstelle(n) (IO) Bus-artig an das externe Lesegerät (RW) und/oder das Kopfmodul (KM) bereitgestellt werden, wobei das elektrische Interfacemodul eine eindeutige Identifikation über die integrierte drahtlose Schnittstelle zur Verfügung stellt, sodass jedes elektrische Interfacemodul (IM) eindeutig identifizierbar ist, wobei elektrische Interfacemodul an Hand der Anzahl der aufgenommenen eindeutigen Identifikation bzw. der aufgenommenen eindeutigen Identifikationen der in der Nachbarschaft befindlichen elektrischen Interfacemodule auswerten kann, ob das aufnehmende elektrische Interfacemodul eine Mittellage oder eine Randlage in Bezug auf benachbarte elektrische Interfacemodule aufweist.

2. Elektrisches Interfacemodul (IM) nach Anspruch 1, wobei die benachbarten elektrischen Interfacemodule (IM) Daten mittels der drahtlosen Schnittstellen austauschen, wobei ein elektrisches Interfacemodul Daten eines benachbarten elektrischen Interfacemoduls, welches sich außer Reichweite für ein anderes elektrisches Interfacemodul befindet, an dieses andere elektrische Interfacemodul Repeater-artig weiterreicht.

3. Elektrisches Interfacemodul (IM) nach einem der vorhergehenden Ansprüche, wobei das elektrische Interfacemodul das Funktionieren eines oder mehrerer benachbarter elektrischer Interfacemodule überwacht und im erkannten Fehlerfall des einen oder eines der mehreren benachbarten elektrischen Interfacemoduls, den erkannten Fehler meldet.

4. Elektrisches Interfacemodul (IM) nach Anspruch 3, **dadurch gekennzeichnet, dass** das elektrische Interfacemodul (IM) an Hand der Anzahl der über die drahtlose Schnittstelle (IO) zu einem ersten Zeitpunkt erkannten benachbarten elektrischen Interfacemodule und der Anzahl der zu einem nachfolgendem zweiten Zeitpunkt erkannten benachbarten elektrischen Interfacemodule einen Fehlerfall erkennt.

5. Elektrisches Interfacemodul (IM) nach Anspruch 3 oder 4, **dadurch gekennzeichnet, dass** das elektrische Interfacemodul an Hand der Anzahl und Identifikation der über die drahtlose Schnittstelle zu einem ersten Zeitpunkt erkannten benachbarten elektrischen Interfacemodule und der Anzahl der zu einem nachfolgendem zweiten Zeitpunkt erkannten benachbarten elektrischen Interfacemodule einen Ort eines Fehlerfall erkennt.

6. Elektrisches Interfacemodul (IM) nach einem der vorhergehenden Ansprüche, **dadurch gekennzeichnet, dass** das elektrische Interfacemodul an Hand der Anzahl und Identifikation der über die drahtlose Schnittstelle zu einem ersten Zeitpunkt erkannten benachbarten elektrischen Interfacemodule ein logisches Abbild der physikalischen Anordnung der benachbarten elektrischen Interfacemodule erstellt.

7. Elektrisches Interfacemodul (IM) nach einem der vorhergehenden Ansprüche, **dadurch gekennzeichnet, dass** das elektrische Interfacemodul mittels der Schnittstelle in eine Richtung zumindest mit zwei weiteren unmittelbar benachbarte elektrische Interfacemodulen Daten austauschen kann.

8. Elektrisches Interfacemodul (IM) nach einem der vorhergehenden Ansprüche, wobei das elektrische Interfacemodul (IM) mit dem einen weiteren in der Nachbarschaft befindlichen elektrischen Interfacemodul (IM) oder den weiteren in der Nachbarschaft befindlichen elektrischen Interfacemodulen (IM) über die integrierte drahtlose Schnittstelle (IO) Energie austauschen kann.

9. Elektrisches Interfacemodul (IM) nach Anspruch 8, **dadurch gekennzeichnet, dass** lediglich in einem Fehlerfall des elektrischen Interfacemoduls (IM) Energie über die integrierte drahtlose Schnittstelle (IO) bezogen wird, wobei im Fehlerfall die drahtlose Schnittstelle (IO) nicht fehlerbehaftet ist, wobei die Energie zur Übertagung von Fehlerdaten des elektrischen Interfacemoduls (IM) an benachbarte elektrische Interfacemodule zur Verfügung steht.

10. System aufweisend eine Mehrzahl von elektrischen Interfacemodulen (IM) gemäß einem der vorhergehenden Ansprüche, wobei die elektrischen Interfacemodule auf einer Montageschiene (11) angebracht sind.

11. System nach Anspruch 10, weiterhin aufweisend ein Kopfmodul (KM).

12. Verfahren für ein elektrisches Interfacemodul gemäß einem der vorhergehenden Ansprüche zur Erkennung der relativen Lokalsierungen in einem System mit einer Mehrzahl von elektrischen Interfacemodulen gemäß einem der vorhergehenden Ansprüche, aufweisend die Schritte:
Aufnehmen einer Nachricht eines in der Nachbarschaft befindlichen elektrischen Interfacemoduls, wobei die Nachricht die eindeutige Identifikation des sendenden elektrischen Interfacemoduls aufweist,
Warten, ob weiter in der Nachbarschaft befindliche elektrische Interfacemodule innerhalb einer vorbestimmten Zeit eine weitere Nachricht senden, wobei die Nachricht die eindeutige Identifikation des sendenden elektrischen Interfacemoduls aufweist,
Nach Ablauf der vorbestimmten Zeit, Auswerten an Hand der Anzahl der aufgenommenen eindeutigen Identifikation bzw. der aufgenommenen eindeutigen Identifikationen, ob das aufnehmende elektrische Interfacemodul eine Mittellage oder eine Randlage in Bezug auf benachbarte elektrische Interfacemodule aufweist.

13. Verfahren nach Anspruch 12, weiterhin aufweisend den Schritt des Bestimmens einer Feldstärke einer aufgenommen Nachricht, und wobei nach Ablauf der vorbestimmten Zeit die Auswertung weiterhin an Hand der Feldstärke eine benachbarte Leerstelle erkennt.

14. Verfahren nach Anspruch 12 oder 13, weiterhin aufweisend den Schritt des Erhaltens einer Information von einem Kopfmodul (KM)oder einem Lesegerät (RW), dass das elektrische Interfacemodul das erste elektrische Interfacemodul einer logischen Kette sein soll, und weiterhin aufweisend den Schritt des Erstellens eines logischen Abbilds der physikalischen Anordnung der benachbarten elektrischen Interfacemodule an Hand der Anzahl und Identifikation der über die drahtlose Schnittstelle zu einem ersten Zeitpunkt erkannten benachbarten elektrischen Interfacemodule.

## Claims

1. Electrical interface module (IM), wherein the electrical interface module (IM) is selected from a group comprising electronic switching devices, engine control units, (Ethernet) network elements, fieldbus components and systems, I/O devices, relay and protective devices, industrial communications technology devices, process control and measurement devices, monitoring devices and signaling devices, **characterized in that** the electrical interface module (IM) has a memory device (MEM) for storing data and an integrated wireless interface (IO) that makes data available to an external reading device (RW) and/or a head module (KM), whereby the electrical interface module (IM) is arrangeable on a mounting rail (11), wherein the electrical interface module (IM) can exchange data with other nearby electrical interface modules (IM) on the mounting rail (11) via the integrated wireless interface (IO), wherein adjacent electrical interface modules (IM) form a logical bidirectional data bus via the integrated wireless interfaces (IO), wherein data are made available by one nearby electrical interface module (IM) or by the other nearby electrical interface modules (IM) via the integrated wireless interface(s) (IO) in the manner of a bus to the external reading device (RW) and/or head module (KM), and wherein the electrical interface module makes a unique identification available via the integrated wireless interface, so that each electrical interface module (IM) is unambiguously identifiable, whereby the electrical interfacemodul on basis of the amount of received unique identifications respectively the received received unique identification of the the nearby electrical interface module(s) may determine, whether the receiving electrical interface module is in a middle position or in a peripheral position in relation to adjacent electrical interface modules.

2. The electrical interface module (IM) as set forth in claim 1, wherein the adjacent electrical interface modules (IM) exchange data by means of the wireless interfaces, with an electrical interface module forwarding data of an adjacent electrical interface module to another electrical interface module that is out of range for the electrical interface module in the manner of a repeater.

3. The electrical interface module (IM) as set forth in any one of the preceding claims, wherein the electrical interface module monitors the functioning of one or more adjacent electrical interface modules and, in the event that a fault condition of one or more adjacent electrical interface modules is identified, reports the identified fault.

4. The electrical interface module (IM) as set forth in claim 3, **characterized in that** the electrical interface module (IM) identifies a fault condition based on the number of adjacent electrical interface modules detected via the wireless interface (IO) at a first point in time and the number of adjacent electrical interface modules detected at a second point in time.

5. The electrical interface module (IM) as set forth in claim 3 or 4, **characterized in that** the electrical interface module identifies the location of a fault condition based on the number of adjacent electrical interface modules detected via the wireless interface at a first point in time and the number of adjacent electrical interface modules detected at a second point in time.

6. The electrical interface module (IM) as set forth in any one of the preceding claims, **characterized in that** the electrical interface module creates a representation of the physical arrangement of the adjacent electrical interface modules based on the number and identification of the adjacent electrical interface modules detected via the wireless interface at a first point in time.

7. The electrical interface module (IM) as set forth in any one of the preceding claims, **characterized in that** the electrical interface module can exchange data by means of the interface in one direction with at least two other immediately adjacent electrical interface modules.

8. The electrical interface module (IM) as set forth in any one of the preceding claims, wherein the electrical interface module (IM) can exchange power with one other nearby electrical interface module (IM) or the other nearby electrical interface modules (IM) via the integrated wireless interface (IO).

9. The electrical interface module (IM) as set forth in claim 8, **characterized in that** power is drawn via the integrated wireless interface (IO) only in case of a fault condition of the electrical interface module (IM), the wireless interface (IO) not being faulty in the fault condition, and the power for transmitting fault data of the electrical interface module (IM) to adjacent electrical interface modules being available.

10. A system comprising a plurality of electrical interface modules (IM) as set forth in any one of the preceding claims, wherein the electrical interface modules are mounted on a mounting rail (11).

11. The system as set forth in claim 10, further comprising a head module (KM).

12. A method for an electrical interface module according to one of the preceeding claims for identifying the relative locations in a system with a plurality of electrical interface modules according to one of the preceeding claims, comprising the steps:
Receiving of a message of a nearby electrical interface module, with the message having the unique identification of the transmitting electrical interface module;
waiting to see whether other nearby electrical interface modules transmit another message within the predetermined time, this message also having the unique identification of the now-transmitting electrical interface module;
upon lapsing of the predetermined time, evaluating based on the number of unique identifications received whether the receiving electrical interface module is in a middle position or a peripheral position in relation to adjacent electrical interface modules.

13. The method as set forth in claim 12, further comprising the step of determining the field intensity of a received message, wherein the evaluation upon lapsing of the predetermined time also identifies an adjacent void based on the field intensity.

14. The method as set forth in claim 12 or 13, further comprising the step of receiving a piece of information from a head module (KM) or a reading device (RW) to the effect that the electrical interface module is to be the first electrical interface module of a logical chain, and further comprising the step of producing a logical representation of the physical arrangement of the adjacent electrical interface modules based on the number and identification of the adjacent electrical interface modules identified via the wireless interface at a first point in time.

## Revendications

1. Module d'interface électrique (IM), dans lequel le module d'interface électrique (IM) est sélectionné dans un groupe présentant des appareils électriques de commutation, des commandes de moteur, des éléments de réseau (Ethernet), des composants et systèmes de bus de champ, des appareils E/S, des relais et appareils de protection, des appareils de technique de communication industrielle, des appareils de technique de mesure, commande et régulation ainsi que des appareils pour la surveillance et des appareils pour la signalisation,
**caractérisé en ce que** le module d'interface électrique (IM) présente un dispositif de mémoire (MEM) pour le stockage de données et une interface sans fil intégrée (IO) qui met des données à disposition d'un appareil de lecture externe (RW) et/ou d'un module de tête (KM), dans lequel le module d'interface électrique (IM) peut être monté sur un rail de montage (11), dans lequel le module d'interface électrique (IM) peut échanger des données avec d'autres modules d'interface électriques (IM) se trouvant dans le voisinage sur le rail de montage (11) via l'interface sans fil intégrée (IO), dans lequel des modules d'interface électriques voisins (IM) forment un bus de données bidirectionnel logique via les interfaces sans fil intégrées (IO), dans lequel des données de l'un des modules d'interface électriques (IM) se trouvant dans le voisinage ou des autres modules d'interface électriques (IM) se trouvant dans le voisinage peuvent être fournies à la façon d'un bus via la/les interface(s) sans fil intégrée(s) (IO) à l'appareil de lecture externe (RW) et/ou au module de tête (KM), dans lequel le module d'interface électrique met à disposition une identification univoque via l'interface sans fil intégrée de sorte que chaque module d'interface électrique (IM) est identifiable de façon univoque, dans lequel le module d'interface électrique peut évaluer, à l'aide du nombre de l'identification univoque enregistrée ou des identifications univoques enregistrées des modules électriques se trouvant dans le voisinage, si le module d'interface électrique qui enregistre présente une position centrale ou une position de bord par rapport à des modules d'interface électriques voisins.

2. Module d'interface électrique (IM) selon la revendication 1, dans lequel les modules d'interface électriques (IM) voisins échangent des données au moyen des interfaces sans fil, dans lequel un module d'interface électrique retransmet, à la manière d'un répéteur, des données d'un module d'interface électrique voisin, lequel se trouve hors de portée pour un autre module d'interface électrique, à cet autre module d'interface électrique.

3. Module d'interface électrique (IM) selon l'une des revendications précédentes, dans lequel le module d'interface électrique surveille le fonctionnement d'un ou plusieurs module(s) d'interface électrique(s) voisin (s) et, en cas d'erreur reconnue de ce, ou de l'un des plusieurs module(s) d'interface électrique(s) voisin(s), signale l'erreur reconnue.

4. Module d'interface électrique (IM) selon la revendication 3, **caractérisé en ce que** le module d'interface électrique (IM) reconnais un cas d'erreur à l'aide du nombre de modules d'interface électriques voisins reconnus à un premier moment via l'interface sans fil (IO) et du nombre de modules d'interface électriques voisins reconnus à un deuxième moment suivant.

5. Module d'interface électrique (IM) selon la revendication 3 ou 4, **caractérisé en ce que** le module d'interface électrique reconnaît, à l'aide du nombre et de l'identification des modules d'interface électriques voisins reconnus via l'interface sans fil à un premier moment et du nombre de modules d'interface électriques voisins reconnus à un deuxième moment suivant, un endroit d'un cas d'erreur.

6. Module d'interface électrique (IM) selon l'une des revendications précédentes, **caractérisé en ce que** le module d'interface électrique établit, à l'aide du nombre et de l'identification des modules d'interface électriques voisins reconnus à un premier moment via l'interface sans fil, une représentation logique de l'agencement physique des modules d'interface électriques voisins.

7. Module d'interface électrique (IM) selon l'une des revendications précédentes, **caractérisé en ce que** le module d'interface électrique peut échanger des données dans une direction au moyen de l'interface avec au moins deux autres modules d'interface électriques directement voisins.

8. Module d'interface électrique (IM) selon l'une des revendications précédentes, dans lequel le module d'interface électrique (IM) peut échanger de l'énergie avec cet autre module d'interface électrique (IM) se trouvant dans le voisinage ou les autres modules d'interface électriques (IM) se trouvant dans le voisinage via l'interface sans fil intégrée (IO).

9. Module d'interface électrique (IM) selon la revendication 8, **caractérisé en ce que**, uniquement dans un cas d'erreur du module d'interface électrique (IM), de l'énergie est reçue via l'interface sans fil intégrée (IO), dans lequel, en cas d'erreur, l'interface sans fil (IO) n'est pas entachée d'erreur, dans lequel l'énergie est disponible pour la transmission de données d'erreur du module d'interface électrique (IM) à des modules d'interface électriques voisins.

10. Système présentant une pluralité de modules d'interface électriques (IM) selon l'une des revendications précédentes, dans lequel les modules d'interface électriques sont montés sur un rail de montage (11).

11. Système selon la revendication 10, présentant en outre un module de tête (KM).

12. Procédé pour un module d'interface électrique selon la revendication 1 pour la reconnaissance des localisations relatives dans un système avec une pluralité de modules d'interface électriques selon la revendication 1, présentant les étapes suivantes :
enregistrer un message d'un module d'interface électrique se trouvant dans le voisinage, dans lequel le message présente l'identification univoque du module d'interface électrique qui émet,
attendre si des modules d'interface électriques se trouvant en plus dans le voisinage envoient un autre message dans les limites d'un temps prédéfini, dans lequel le message présente l'identification univoque du module d'interface électrique qui émet,
après l'écoulement du temps prédéfini, évaluer à l'aide du nombre de l'identification univoque enregistrée ou des identifications univoques enregistrées si le module d'interface électrique qui enregistre présente une position centrale ou une position de bord par rapport à des modules d'interface électriques voisins.

13. Procédé selon la revendication 12, présentant en outre l'étape de détermination d'une intensité de champ d'un message enregistré, et dans lequel, après l'écoulement du temps prédéfini, l'évaluation reconnaît en outre une place libre voisine à l'aide de l'intensité de champ.

14. Procédé selon la revendication 12 ou 13, présentant en outre l'étape d'obtention d'une information d'un module de tête (KM) ou d'un appareil de lecture (RW) en ce que le module d'interface électrique doit être le premier module d'interface électrique d'une chaîne logique, et présentant en outre l'étape d'établissement d'une représentation logique de l'agencement physique des modules d'interface électriques voisins à l'aide du nombre et de l'identification des modules d'interface électriques voisins reconnus à un premier moment via l'interface sans fil.
